(19) Europäisches Patentamt
European Patent Office
Office européen des brevets

(11) **EP 4 596 723 A1**

(12) **EUROPEAN PATENT APPLICATION**
published in accordance with Art. 153(4) EPC

(43) Date of publication:
**06.08.2025 Bulletin 2025/32**

(21) Application number: **23891430.3**

(22) Date of filing: **07.11.2023**

(51) International Patent Classification (IPC):
**C21C 5/52** $^{(2006.01)}$          **C21C 7/00** $^{(2006.01)}$

(52) Cooperative Patent Classification (CPC):
**C21C 5/52; C21C 7/00;** Y02P 10/20

(86) International application number:
**PCT/JP2023/040112**

(87) International publication number:
**WO 2024/106278 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.11.2022   JP 2022183650**

(71) Applicant: **JFE Steel Corporation
Tokyo 100-0011 (JP)**

(72) Inventors:
• **MURAI Takeshi
Tokyo 100-0011 (JP)**
• **HARADA Akifumi
Tokyo 100-0011 (JP)**

(74) Representative: **Hoffmann Eitle
Patent- und Rechtsanwälte PartmbB
Arabellastraße 30
81925 München (DE)**

(54) **METHOD FOR MELTING AND REFINING STEEL AND METHOD FOR MANUFACTURING STEEL**

(57)     A method is provided of smelting low-nitrogen steel in an electric arc furnace by suppressing entry of nitrogen from a furnace atmosphere into molten steel during smelting of ferrous raw material. The method comprises a step of melting ferrous raw material to smelt molten steel using an electric arc furnace, in which a nitrogen-free gas is supplied around a circumferential surface of an electrode of the electric furnace and from a base end toward a tip end of the electrode. Further, a method is provided of producing steel in which the molten steel is subjected to composition adjustment then cast.

*FIG. 1*

**Description**

TECHNICAL FIELD

The present disclosure relates to a method of smelting steel, in particular a method of smelting low-nitrogen steel that has low nitrogen content using an electric arc furnace, and a method of producing steel using molten steel obtained by the method of smelting steel. Low-nitrogen steel refers to steel that has a chemical composition that has a nitrogen content of 40 mass ppm or less in the molten steel.

BACKGROUND

In recent years, from a carbon-neutral perspective, the electric furnace steelmaking method, which generates less $CO_2$ than the blast furnace-converter steelmaking method, has been attracting attention as a method for melting low-carbon ferrous raw material. Raw material used in electric furnace steelmaking is a wide variety of scrap, and most of the conventional products produced by the electric furnace steelmaking method are steel bars, shaped steel, and the like, or so-called low-grade steel. Therefore, in order to replace the blast furnace-converter steelmaking method with the electric furnace steelmaking method, it is necessary to also be able to produce cold-rolled steel sheets, surface-treated steel sheets, and the like, or so-called high-grade steel.

However, the nitrogen concentration in molten steel produced by the electric furnace steelmaking method, especially by the electric arc furnace steelmaking method, is typically 50 mass ppm to 100 mass ppm, which is higher than that of molten steel produced by a converter. For example, in high-grade sheet steel, such as a cold-rolled steel sheet for deep drawing, the nitrogen content is required to be kept to 40 mass ppm or less to suppress aging phenomena caused by nitrogen in the steel. Stable production of steel with such low nitrogen content is a major challenge in the electric arc furnace steelmaking method.

Compared to a converter furnace, an electric arc furnace has some major differences in terms of apparatus and operation, as indicated under 1) to 3) below.

(1) Electric arc furnaces are substantially open systems and draw more air into the furnace than converter furnaces, that is, the nitrogen concentration in the furnace is higher.
(2) In an electric arc furnace, the atmosphere gas in the furnace during arcing is atomized, and the nitrogen in the atmosphere gas in the furnace is easily absorbed into the molten steel at the arc spot.
(3) In an electric arc furnace, less CO gas is generated and less denitrification due to CO gas bubbles occurs than in converter furnaces.

To address the situation described above, proposals have been made for conventional technology that actively carries out CO boiling associated with a decarburization reaction during the refining period by adjusting the main raw material or by blowing in carbon material when producing low-nitrogen steel by the electric arc furnace steelmaking method. Specifically, this active CO boiling has been used to promote slag forming, decrease the amount of nitrification in the molten steel due to the points described under 1) and 2) above, and promote denitrification from the molten steel by CO gas bubbles as described under 3) above.

For example, in Patent Literature (PTL) 1, a method is proposed to increase the carbon concentration in molten steel after melting down by using coke oven gas, blast furnace gas, and converter gas as carrier gases for carbon blowing in order to increase CO gas generation.

Further, in PTL 2 and 3, methods are proposed of supplying high-purity oxygen gas to molten metal with the C content maintained at an appropriate value, thereby allowing CO boiling to continue for a certain period of time to maintain sufficient slag forming.

In PTL 4, a method is proposed that carries out a decarburization process by making the electrode hollow and supplying hydrocarbon gas as a carbon source through the hollow portion at a certain flow rate or more, and blowing oxygen gas.

Further, as a method to decrease the amount of nitrification caused as described under 1) and 2) that is not dependent on a decarburization reaction, in PTL 5 a method is proposed of making the electrode hollow and supplying inert gas such as Ar (argon) and/or reducing gas such as hydrocarbon from the hollow portion to the arc portion.

CITATION LIST

Patent Literature

PTL 1: JP H03-28312 A
PTL 2: JP H10-121123 A
PTL 3: JP H11-12634 A
PTL 4: JP 6413710 B2
PTL 5: JP S52-147513 A

SUMMARY

(Technical Problem)

According to the methods described in PTL 1 to 4, the carbon concentration of molten iron is increased by a solid or gaseous carbon source, followed by a decarburization process to increase CO gas generation. However, an increase in CO gas generation would contradict the reason for converting from the blast furnace-converter steelmaking method to the electric furnace method, which is to decrease $CO_2$ generation.

When inert gas is used according to the method described in PTL 5, no carbon source is used and therefore CO gas generation is suppressed. However, gas is blown into the hollow portion of the electrode, that is, inside of the arc, and therefore suppressing atomization of atmospheric gas in the furnace, as described under 2) above, became difficult, and the effect of preventing nitrification was limited.

In view of these circumstances, it would be helpful to provide a method for smelting low-nitrogen steel in an electric arc furnace by suppressing the entry of nitrogen from the furnace atmosphere into the molten steel during melting and refining of ferrous raw material.

(Solution to Problem)

The inventors have extensively researched ways to advantageously solve the technical problems described above, and have discovered that supplying a nitrogen-free gas around the electrode of an electric furnace to cut off the arc discharge from the furnace atmosphere is effective in suppressing entry of nitrogen into the molten steel from the furnace atmosphere, and thereby arrived at the present disclosure. Primary features of the present disclosure are as follows.

1. A method of smelting steel comprising a step of melting a ferrous raw material using an electric arc furnace to smelt molten steel, wherein the step comprises supplying a nitrogen-free gas around a circumferential surface of an electrode of the electric arc furnace and from a base end toward a tip end of the electrode.

2. The method of smelting steel according to 1, above, wherein part or all of an outer circumferential surface of an arc at a tip of the electrode is covered by the gas, due to the supplying of the gas.

3. The method of smelting steel according to 1 or 2, above, wherein the supplying of the gas is stopped after the electrode is immersed in slag that forms on a surface of the molten steel.

4. The method of smelting steel according to 3, above, wherein a time point at which the electrode is immersed in the slag is detected via an optical camera inserted into the electric furnace.

5. The method of smelting steel according to any one of 1 to 4, above, wherein the gas is at least one selected from the group consisting of inert gas, hydrogen, and hydrocarbon.

6. The method of smelting steel according to any one of 1 to 5, above, wherein an oxygen gas corresponding to an increase in a carbon concentration in the molten steel is blown into the molten steel by a separate system from a system supplying the gas, in a case that the gas contains carbon.

7. A method of producing steel comprising adjusting a composition of the molten steel smelted by the method according to any one of 1 to 6, above, and then casting the molten steel.

(Advantageous Effect)

According to the present disclosure, contact between the arc and the atmosphere in the furnace is blocked by the nitrogen-free gas, suppressing nitrification of the molten steel, and therefore it is possible to produce low-nitrogen steel using an electric arc furnace.

BRIEF DESCRIPTION OF THE DRAWINGS

In the accompanying drawings:

FIG. 1 is a cross-section view of a half portion illustrating an electric furnace used according to the present disclosure;
FIG. 2A and FIG. 2B are diagrams illustrating structures of nozzles for gas blowing;

FIG. 3A and FIG. 3B are schematic diagrams illustrating gas distribution around an arc discharge at the tip of an electrode;

FIG. 4A and FIG. 4B are diagrams for describing how to determine coverage R.

DETAILED DESCRIPTION

A method of smelting steel according to the present embodiments is described below, with reference to the drawings. First, an electric arc furnace apparatus used to implement the method of smelting low-nitrogen steel according to the present embodiments is described, followed by a description of the method of smelting low-nitrogen steel according to the present embodiments.

[Electric arc furnace apparatus]

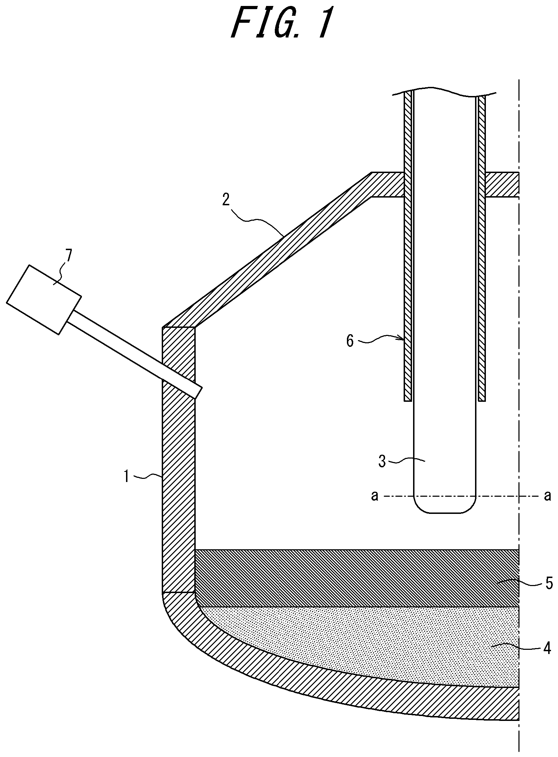

FIG. 1 illustrates a longitudinal section in the furnace radial direction for a half portion bordering the central axis of the electric furnace used in the method according to the present disclosure. The system of the electric arc furnace may be either direct current or alternating current.

In FIG. 1, 1 is the furnace body, 2 is the furnace lid, 3 is an electrode, 4 is molten steel, 5 is slag, 6 is a nozzle for gas blowing, 7 is a camera for in-furnace observation, 8 is nozzles for gas blowing in the form of narrow tubes, and 9 is a nozzle for gas blowing that is cylindrical.

The electrode 3, or more than one of the electrodes 3, is normally disposed in the furnace body 1 so as to be movable in the vertical direction. By generating an arc discharge from the tip of the electrode 3 to heat the inside of the furnace, ferrous raw material charged in the furnace can be melted. Here, the tip of the electrode 3 is rounded in the drawing, but there are other shapes of electrode tip, such as a flat tip, and shape may also change depending on use conditions.

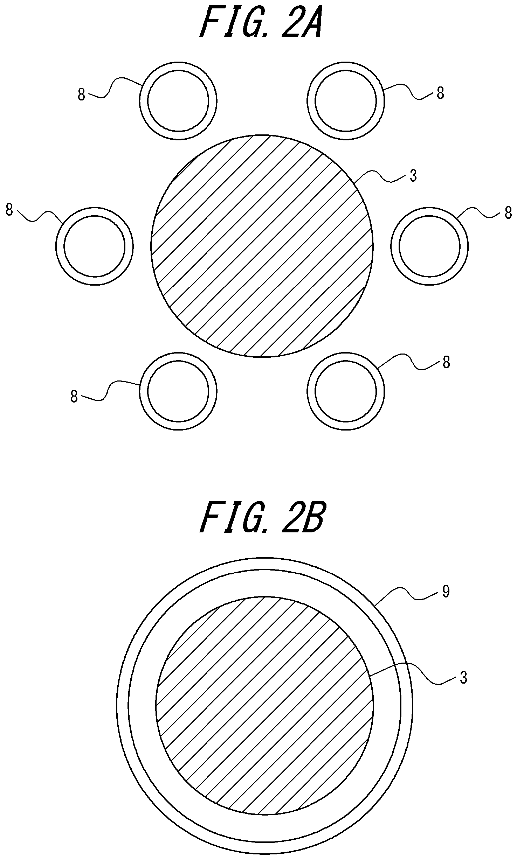

Further, the nozzle 6 for gas blowing, as illustrated in FIG. 2A, may be made up of a plurality of nozzles 8 for gas blowing in the form of narrow tubes surrounding the electrode 3, six in the illustrated example, which is a plan view from the nozzle tip side. Alternatively, as illustrated in FIG. 2B, the nozzle 9 for gas blowing that is cylindrical and has an inner diameter larger than the outer diameter of the electrode 3 may be disposed with the same axis as the electrode 3.

When the tip of the electrode 3 is rounded, number of nozzles, and horizontal position and vertical position relative to the electrode 3 of the nozzle 6 for gas blowing are preferably determined so that the circumference of the electrode 3 is covered with a nitrogen-free gas (hereinafter also referred to simply as "gas"), preferably all around, at a line segment connecting the shoulder of the electrode tip, that is, the a-a line in FIG. 1. Specific examples are illustrated in FIG. 2A and FIG. 2B. Further, when the tip of the electrode 3 is flat, the conditions described above for the nozzle for gas blowing are preferably set so that the circumference of the electrode 3 is covered with the gas at a position of the tip face.

Further, the nozzle 6 for gas blowing is preferably configured to be movable up and down independently of the electrode 3 while disposed alongside the electrode 3. This configuration makes it possible to vary the position of the nozzle 6 for gas blowing relative to the electrode 3, which more effectively cuts off contact between the arc generated from the electrode 3 and the furnace atmosphere.

The drawings are schematic and may differ from actual implementation. Further, the present embodiments are examples of devices and methods for embodying the technical concept of the present disclosure, and configurations are not limited to the above and below descriptions. That is, various changes may be made to the technical concept of the present disclosure within the technical scope described in the claims.

[Method of smelting low-nitrogen steel]

The following is a description of a preferred example of the present embodiments of the method according to the present disclosure.

First, ferrous raw material is charged into an electric arc furnace. At this time, the inside of the furnace body 1 may be empty or may contain molten steel remaining from the previous processing. Here, in addition to iron scrap, reduced iron, hot metal, and pig iron may be used as ferrous raw material.

The electrode 3 and the nozzle 6 for gas blowing are then inserted into the furnace body 1, the electrode 3 is energized, and the gas is blown downward from the nozzle 6 for gas blowing to start the melting process. As indicated under 2) above, nitrogen in the furnace atmosphere is atomized when coming into contact with the arc generated by the electrode 3, resulting in increased nitrification in the molten steel. It is therefore essential to decrease the contact region between the arc and the furnace atmosphere to suppress nitrification in the molten steel.

Therefore, gas is blown between the arc and the furnace atmosphere to cut off contact between the two. When even a portion of the region that blocks contact between the arc and the furnace atmosphere exists, the effect of suppressing nitrification of molten steel can be expected. For example, as mentioned above, when gas is blown from the nozzles 8 or 9 for gas blowing disposed around the electrode 3 so as to surround the outer circumferential portion of the arc, it may not be possible to cover all of the arc outer circumferential surface with gas when the number of nozzles is small, when the nozzles are partially clogged, or similar. However, even in such cases, a portion of the outer circumferential surface of the arc is covered with gas, which provides an effect of suppressing nitrification compared to a case where no gas is blown. Of course, the more the contact blocking region is increased, the greater the effect of suppressing nitrification, and the effect of suppressing nitrification is maximized when the entire outer circumferential surface of the arc is covered by gas and all contact with the furnace atmosphere is cut off.

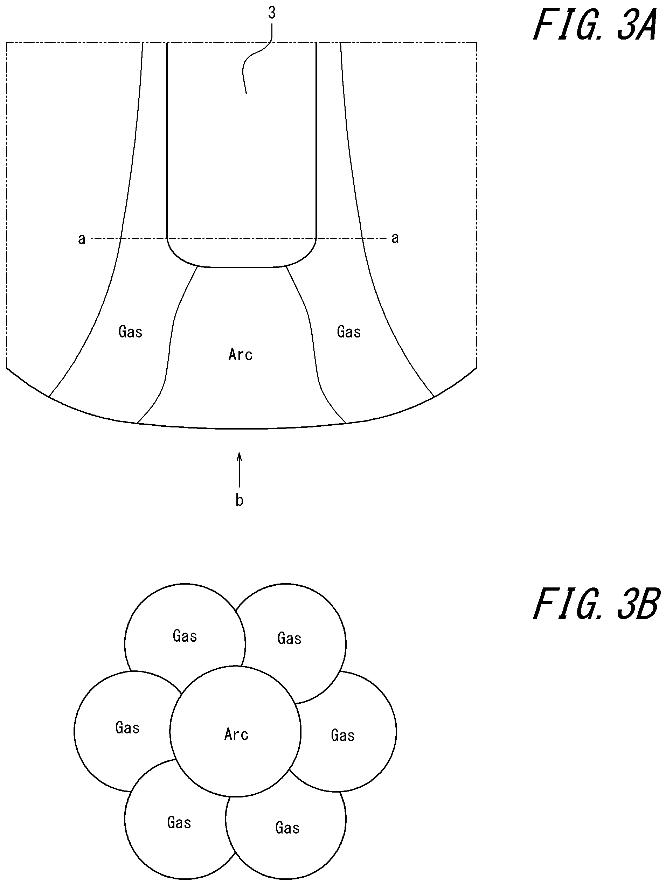

The region where the arc contacts the furnace atmosphere is below the tip of the electrode 3. Therefore, when the gas supply is realized so that part or all of the outer circumferential surface of the arc at the tip of the electrode 3 is covered, the gas will spread downward, and therefore the effects described above of contact blocking and suppressing nitrification are not decreased. Here, "all of the outer circumferential surface of the arc at the tip of the electrode 3 is covered" means that the entire circumference of the arc generated from the tip of the electrode 3 is surrounded by gas, as illustrated in the side view of the electrode 3 in FIG. 3A and the view from along the arrow b in FIG. 3A, illustrated in FIG. 3B.

Here, the gas blowing supply is preferably carried out according to the following conditions. It is preferable to ensure that the average gas flow rate at the tip position of the electrode 3 is 5 m/s or more. When the average gas flow rate at the electrode tip position is less than 5 m/s, the gas may not reach the electrode tip due to conditions of molten steel, slag, and furnace atmosphere in the electric furnace, and the effect of cutting off the arc from the furnace atmosphere may be decreased.

The gas blown from the nozzle 6 for gas blowing is not particularly limited as long as the gas does not contain nitrogen. Examples include inert gases such as noble gases (argon, helium, etc.) and $CO_2$, hydrogen, oxygen, CO, hydrocarbon gases (propane, methane, etc.), and the like. Considering effects on the furnace body 1 or the electrode 3 and reactions with the molten steel 4 or the slag 5, the gas is preferably mixed gas of one or more selected from the group consisting of inert gas, hydrogen gas, and hydrocarbon gas. In particular, hydrogen gas and hydrocarbon gases, like nitrogen as described under 2), may atomize in the arc and dissolve in the molten steel to a concentration higher than thermodynamic equilibrium, and the hydrogen concentration outside the arc may decrease to thermodynamic equilibrium, that is, dehydrogenation may occur. Dehydrogenation is accompanied by the generation of hydrogen gas bubbles in the molten steel, and therefore the hydrogen gas bubbles are also expected to have a denitrification effect.

Typically, the height of the electrode 3 can be changed according to the melt state of ferrous raw material, in which case it is preferable to raise or lower the nozzle 6 for gas blowing as well.

As the melting of the ferrous raw material progresses, the slag 5 is formed on the molten steel 4 by flux added to adjust the gangue component in the ferrous raw material and P, S, and other components in the molten steel 4. In order to stabilize the current flow, it is effective to cover the tip of the electrode 3 with the slag 5, so it is better to actively immerse the electrode 3 in the slag 5. Once the electrode 3 is immersed in the slag 5, the arc is no longer in direct contact with the furnace atmosphere, and therefore the gas supply from the nozzle 6 for gas blowing may be stopped. Although timing may be possible to determine to some extent by operator experience, for more accurate determination, the camera 7 for in-furnace observation is preferably disposed in the furnace body 1 for direct observation of the inside of the furnace to determine whether the electrode 3 is immersed in the slag 5. The camera 7 for in-furnace observation is not particularly limited as long as the camera 7 is one typically used for observing the inside of a furnace, and an optical camera is preferred.

After gas blowing is stopped, the nozzle for blowing gas is preferably raised to the furnace lid 2 to prevent blockage of the nozzle 6 for gas blowing due to splashing of molten iron and the like, and gas is preferably blown at a flow rate sufficient to prevent blockage.

When a gas containing carbon, such as a hydrocarbon, is used as the gas to be blown from the nozzle 6 for gas blowing, the carbon dissolves in the molten steel and the carbon concentration increases. At this time, oxygen gas from a different lance or nozzle (not illustrated) than the nozzle 6 for gas blowing disposed in the furnace body 1 is preferably injected or blown into the molten steel in an amount required to decarburize the increased carbon concentration described above (oxygen supply). The supply of oxygen gas can also be expected to promote denitrification with CO gas bubbles generated by the decarburization reaction.

[Method of producing steel]

The molten steel obtained by the method of smelting steel is subjected to casting after composition adjustment as required. Here, although the molten steel smelted by the method of smelting low-nitrogen steel according to the embodiment described above is a low-nitrogen molten steel, subsequent composition adjustment of the molten steel and casting of the molten steel are not particularly restricted and may be carried out according to conventional methods. Further, the method of producing steel according to the present embodiments uses low-nitrogen molten steel as steel casting material, and therefore can produce low-nitrogen steel.

That is, by using molten steel smelted by the method of smelting steel according to the present embodiments as a material for a steel product, a low-nitrogen steel product is obtainable. From this technical point of view, the applications of steel products made by the method of producing steel according to the present embodiments are not limited and can be appropriately used widely. Among the applications, particularly suitable are steel sheets produced by rolling and steel products produced from such steel sheets.

Although description has been provided with reference to the embodiments, the present disclosure is not limited to the embodiments described. Configurations and details of the present disclosure may be modified in various ways that are understandable to those skilled in the art and fall within the technical scope of the present disclosure.

EXAMPLES

Molten steel was produced by melting ferrous scrap in an electric arc furnace that had the following specifications. The specifications of the electric furnace are listed below.

Furnace body: furnace diameter 7 m, furnace height 5 m
Electrical power: 50 Hz AC
Transformer capacity: 75 MVA
Electrode diameter: 0.64 m
Number of electrodes: 3

130 tonnes of ferrous scrap and 25 kg/t of slag forming agent were charged into the electric furnace, and an arc was generated by the electrodes (upper graphite electrodes) to heat and melt the ferrous scrap. As the ferrous scrap, a composition of steel scrap: 90 mass% and cold iron: 10 mass% was used.

Ar was blown and supplied through the gas blowing nozzle from the start of the ferrous scrap melting (Examples 1 to 4). The inner diameter of the gas blowing nozzle was 3 mm, and the number of nozzles and the nozzle height (distance between nozzle tip and electrode tip) were set to the conditions listed in Table 1.

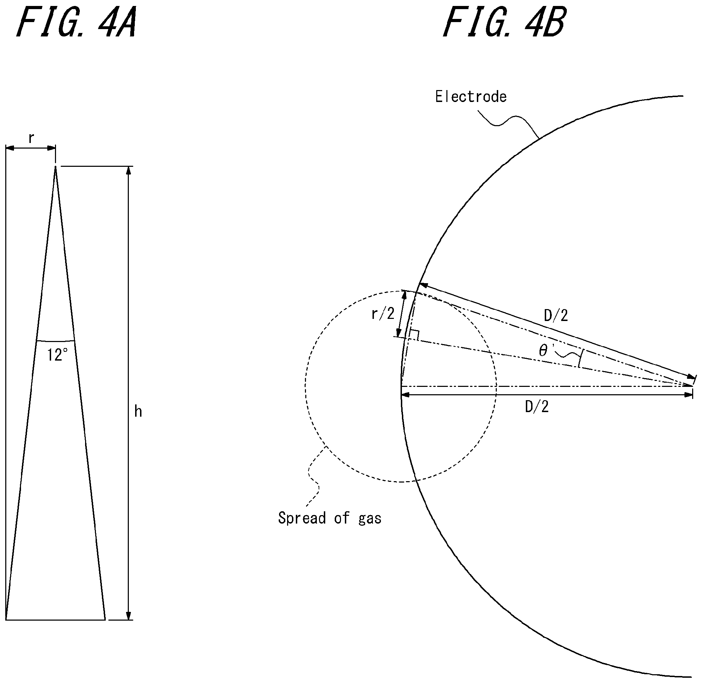

Further, the ratio of the region where the gas contacts the electrode to the total circumference of the electrode was calculated assuming that the gas blown and supplied spreads from the nozzle openings at a spray angle of 12°. The ratio is listed in Table 1 as the coverage R of the outer circumferential surface of the arc at the electrode tip by the blown gas. The coverage can be calculated by the following Expressions (1) to (3). Expression (1) is an expression for determining the gas spread radius r according to FIG. 4A. Next, according to FIG. 4B, the coverage R is determined by first calculating θ' using Expression (2) from the obtained r and electrode diameter, and then substituting θ' into Expression (3).

[Math. 1]

$$r = \tan(6°) \times h \quad \cdots \quad (1)$$

$$\sin\theta' = \frac{(r/2)}{(D/2)} \quad \cdots \quad (2)$$

$$R = \frac{n \times 4\theta'}{360} \quad \cdots \quad (3)$$

However, in Expression (3), R = 1 when $n \times 4\theta' \geq 360°$. Further, r: gas spread radius, h: nozzle height, D: electrode diameter, n: number of nozzles, R: coverage.

During operation, an optical camera was used as an in-furnace observation camera to monitor the melt state, and upon confirmation that slag had formed after the scrap melted down, the electrode was lowered to be immersed in the slag. Further, a condition was implemented so that the gas supply was stopped after the electrode was immersed in the slag (Example 5). Further, conditions were implemented so that the blowing gas was hydrogen or propane gas (Examples 6 and 7).

Further, when propane gas was blown in, the yield of carbon in the molten steel when propane gas was blown in under the same conditions was confirmed in advance, and a condition was implemented in which oxygen gas in an amount sufficient to decarburize the retained carbon was injected from a separate lance (Example 8). In Table 1, such a condition is indicated as "Yes" under Oxygen supply.

Further, as a comparison, the test was also conducted under a condition without gas blowing (Comparative Example).

After all ferrous raw material was melted, current passage was continued until the temperature of the molten steel reached the target temperature. After the end of current passage, a sample of molten iron was taken and analyzed for nitrogen concentration in the steel. The nitrogen concentration in the steel after the end of current passage is listed in Table 1.

As indicated in Table 1, gas blowing to cut off the arc from the furnace atmosphere during electric furnace current passage resulted in suppression of an increase of nitrogen in the molten steel.

[Table 1]

Table 1

| | Current passage time | Molten steel temperature after current passage | Gas blowing | | | | | | Oxygen supply | | Concentration after processing | |
|---|---|---|---|---|---|---|---|---|---|---|---|---|
| | | | Gas | Flow rate | Number of nozzles $n$ | Nozzle height $h$ | Coverage $R$ | Blowing period | | Flow rate | [C] | [N] |
| | (min) | (°C) | | (Nm³/min) | (No.) | (m) | (%) | | | (Nm³) | (mass%) | (mass ppm) |
| Example 1 | 58 | 1630 | Ar | 3 | 6 | 0.8 | 50 | During current passage | No | - | 0.0510 | 38 |
| Example 2 | 60 | 1634 | Ar | 3 | 6 | 1.0 | 63 | During current passage | No | - | 0.0500 | 36 |
| Example 3 | 60 | 1634 | Ar | 4 | 8 | 1.0 | 84 | During current passage | No | - | 0.0500 | 35 |
| Example 4 | 62 | 1631 | Ar | 4 | 8 | 1.3 | 100 | During current passage | No | - | 0.0470 | 29 |
| Example 5 | 62 | 1627 | Ar | 4 | 8 | 1.3 | 100 | Up to electrode immersion | No | - | 0.0480 | 31 |
| Example 6 | 62 | 1626 | Hydrogen | 4 | 8 | 1.3 | 100 | During current passage | No | - | 0.0450 | 27 |
| Example 7 | 60 | 1621 | Propane | 4 | 8 | 1.3 | 100 | During current passage | No | - | 0.1650 | 25 |
| Example 8 | 65 | 1645 | Propane | 4 | 8 | 1.3 | 100 | Up to electrode immersion | Yes | 240 | 0.0440 | 22 |

| | Current passage time | Molten steel temperature after current passage | Gas blowing | | | | | | Oxygen supply | | Concentration after processing | |
|---|---|---|---|---|---|---|---|---|---|---|---|---|
| | | | Gas | Flow rate | Number of nozzles **n** | Nozzle height **h** | Coverage **R** | Blowing period | | Flow rate | [C] | [N] |
| | (min) | (°C) | | (Nm³/min) | (No.) | (m) | (%) | | | (Nm³) | (mass%) | (mass ppm) |
| Comparative Example | 59 | 1633 | No | - | - | - | - | - | No | - | 0.0470 | 46 |

INDUSTRIAL APPLICABILITY

According to the method of smelting low-nitrogen steel of the present disclosure, in an electric arc furnace, the arc is cut off from the furnace atmosphere with gas, thereby suppressing absorption of nitrogen into molten steel. The method of producing low-nitrogen steel can suppress nitrification of molten steel during electric arc furnace energization, and is therefore extremely applicable to industries such as steelmaking.

REFERENCE SIGNS LIST

1    furnace body
2    furnace lid
3    electrode
4    molten steel
5    slag
6    nozzle for gas blowing
7    camera for in-furnace observation
8    nozzles for gas blowing in the form of narrow tubes
9    nozzle for gas blowing that is cylindrical

**Claims**

1. A method of smelting steel comprising a step of melting a ferrous raw material using an electric arc furnace to smelt molten steel, wherein the step comprises supplying a nitrogen-free gas around a circumferential surface of an electrode of the electric arc furnace and from a base end toward a tip end of the electrode.

2. The method of smelting steel according to claim 1, wherein part or all of an outer circumferential surface of an arc at a tip of the electrode is covered by the gas, due to the supplying of the gas.

3. The method of smelting steel according to claim 1 or 2, wherein the supplying of the gas is stopped after the electrode is immersed in slag that forms on a surface of the molten steel.

4. The method of smelting steel according to claim 3, wherein a time point at which the electrode is immersed in the slag is detected via an optical camera inserted into the electric furnace.

5. The method of smelting steel according to any one of claims 1 to 4, wherein the gas is at least one selected from the group consisting of inert gas, hydrogen, and hydrocarbon.

6. The method of smelting steel according to any one of claims 1 to 5, wherein an oxygen gas corresponding to an increase in a carbon concentration in the molten steel is blown into the molten steel by a separate system from a system supplying the gas, in a case that the gas contains carbon.

7. A method of producing steel comprising adjusting a composition of the molten steel smelted by the method according to any one of claims 1 to 6, and then casting the molten steel.

# *FIG. 1*

# FIG. 2A

# FIG. 2B

*FIG. 3A*

*FIG. 3B*

FIG. 4B

FIG. 4A

## INTERNATIONAL SEARCH REPORT

| International application No. |
|---|
| **PCT/JP2023/040112** |

| A. | CLASSIFICATION OF SUBJECT MATTER |
|---|---|

*C21C 5/52*(2006.01)i; *C21C 7/00*(2006.01)i
FI:    C21C5/52; C21C7/00 N; C21C7/00 R

According to International Patent Classification (IPC) or to both national classification and IPC

| B. | FIELDS SEARCHED |
|---|---|

Minimum documentation searched (classification system followed by classification symbols)

C21C5/52; C21C7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113416812 B (UNIV BEIJING SCIENCE & TECH) 05 November 2021 (2021-11-05) paragraphs [0008], [0027], [0029], [0083], [0084], fig. 1 | 1-2, 5-7 |
| A | | 3-4 |

☐ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 December 2023** | **23 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

| | International application No. |
|---|---|
| | PCT/JP2023/040112 |

| Patent document cited in search report | Publication date (day/month/year) | Patent family member(s) | Publication date (day/month/year) |
|---|---|---|---|
| CN 113416812 B | 05 November 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0328312 A
- JP H10121123 A
- JP H1112634 A

- JP 6413710 B
- JP S52147513 A